# EUROPEAN PATENT APPLICATION

(11) **EP 4 752 330 A1**
(43) Date of publication of application: **03.06.2026**
(21) Application number: 25217670.6
(22) Date of filing: 21.11.2025
(51) Int. Cl.: F01D 5/32, F01D 5/30, F01D 5/28

(54) **BLADE-DISK ASSEMBLY FOR A GAS TURBINE AND GAS TURBINE**

(30) Priority: 27.11.2024 KR 20240171881
(71) Applicant: Doosan Enerbility Co., Ltd., Seongsan-gu Changwon-si, Gyeongsangnam-do 51711 (KR)
(72) Inventor: GOROSHCHAK, Iurii, 50975 Gimhae-si, Gyeongsangnam-do (KR); BAEK, Seol, 51317 Changwon-si, Gyeongsangnam-do (KR)
(74) Representative: BCKIP Part mbB

(57) **Abstract**

A blade-disk assembly (200) for a gas turbine (100) includes a blade (230) having a root part (235), a disk (210) having a disk slot (213), into which the root part (235) is inserted, and a fixing block (250) inserted into a block assembly groove (237) of the blade (230) and a block insertion groove (215) of the disk in a circumferential direction (D2) to retain an axial position of the blade (230) with respect to the disk (210).The gas turbine (100) includes a compressor (110) configured to draw in and compress external air, a combustor (104) configured to mix fuel with the external air compressed in the compressor (110) and to combust a mixture of fuel and the compressed air, and a turbine (120), which comprises the blade-disk assembly (200), in which the blade (230) and the disk (210) are assembled and rotated by a combustion gas discharged from the combustor (104).

## Description

This application claims the benefit of priority to Korean Patent Application No. 10-2024-0171881, filed in the Korean Intellectual Property Office on November 27, 2024.

### TECHNICAL FIELD

The present disclosure relates to a gas turbine.

### BACKGROUND

A turbine is a mechanical apparatus that obtains rotational force with impulse or reaction power by using a flow of a compressible fluid, such as steam or gas, and examples thereof include a steam turbine using steam and a gas turbine using high-temperature combustion gas.

Among these, the gas turbine mainly includes a compressor, a combustor, and a turbine. The compressor is provided with an air inlet for introducing air, and a plurality of compressor vanes and compressor blades are alternately arranged in a compressor casing.

The combustor supplies fuel to compressed air that is compressed in the compressor and ignites it with a burner, and thus, high-temperature and high-pressure combustion gas is generated.

The turbine has a plurality of turbine vanes and turbine blades that are alternately disposed in a turbine casing. Furthermore, a rotor is disposed to pass through the compressor, the combustor, the turbine, and a center of an exhaust chamber.

Opposite ends of the rotor are rotatably supported by bearings. Furthermore, a plurality of disks are fixed to the rotor, and the respective blades are connected thereto, and a drive shaft, such as a power generator, is connected to an end of the exhaust chamber.

The gas turbine does not have a reciprocating mechanism such as pistons of a four-stroke engine, and thus, there are no mutual frictional portions, such as a piston and a cylinder, resulting in extremely low consumption of lubricating oil, significantly reduced vibration characteristic of reciprocating machines, and high-speed operation.

Briefly describing the operation of the gas turbine, the air compressed in the compressor is mixed with the fuel and burned to generate high-temperature combustion gas, and the combustion gas generated in this way is injected toward the turbine. The injected combustion gas generates rotational force while passing through the turbine vanes and the turbine blades, and thus, the rotor is rotated.

The compressor and the turbine may have a structure, in which a plurality of blades are coupled to a disk. In this case, by fixing the blade to the disk by using a fixing component, the blade may be prevented from being separated from the disk during the operation of the gas turbine.

A conventional component for fixing the blade to the disk has a structure, in which three or more components are assembled, and one of the plurality of components for assembly includes a bent component.

However, in such a structure, the bent component has to be repurchased when the assembly is disassembled and reassembled, and due to the characteristics of the bent shape, it is difficult to ensure the assembly reliability of the bent component. Furthermore, it is difficult to visually identify it when the conventional method is used.

### SUMMARY

The present disclosure has been made to solve the above-mentioned problems occurring in the prior art while advantages achieved by the prior art are maintained intact.

An aspect of the present disclosure provides a gas turbine capable of preventing a blade from being axially separated from a disk under any operating condition of the gas turbine.

An aspect of the present disclosure also provides a gas turbine that is easy to manage in terms of fixing components and allows reuse of the components.

An aspect of the present disclosure also provides a gas turbine, by which blade replacement operations are facilitated, assembly and disassembly performance is improved, and costs are reduced.

The technical problems to be solved by the present disclosure are not limited to the aforementioned problems, and any other technical problems not mentioned herein will be clearly understood from the following description by those skilled in the art to which the present disclosure pertains.

According to an aspect of the present disclosure, a blade-disk assembly for a gas turbine includes a blade having a root part, a disk having a disk slot, into which the root part is inserted, and a fixing block inserted into a block assembly groove of the blade and a block insertion groove of the disk in a circumferential direction to retain an axial position of the blade with respect to the disk.

The disk may include a disk body, in which the disk slot is formed, wherein the block insertion groove is formed is the disk body such that the fixing block is inserted thereinto, and the block insertion groove extends in the circumferential direction.

The block insertion groove may have a T-shaped cross-section in a plane that is perpendicular to the circumferential direction.

The disk body may further include a pair of separation preventing projections that form the block insertion groove, a lower projection of the pair of separation preventing projections may extend radially outward and a upper projection of the pair of separation prevention projections may extend radially inward such that they face each other to form the T-shaped cross-section of the block insertion groove, and the block insertion groove may be formed to be opened toward one axial side.

The blades further include a blade body, and a platform part that is formed between the blade body and the root part.

The block assembly groove is formed in the root part and configured such that the fixing block is inserted thereinto, and the block assembly groove extends in the circumferential direction.

The block assembly groove defines a slide groove together with the block insertion groove defines a slide groove when the blade and the disk are coupled to each other, into which the fixing block is inserted and in which the fixing block is configured to slide.

The slide groove may be divided into the block assembly groove that is located in a central area in the circumferential direction and the block insertion groove that is located at opposite sides of the block assembly groove, and an opening that is opened toward one axial side is formed, and a portion of the fixing block may be inserted into the block assembly groove, and a remaining portion of the fixing block may be inserted into the block insertion groove.

The root part may further include an assembly rib that extends radially inward to define the block assembly groove, and a position of an radially inward end of the assembly rib may be located at a position that is more distant from the central axis of the disk than a position of an radially inward end of other portion of the root part.

The fixing block may include an insertion part that is inserted into the block assembly groove and the block insertion groove, and an exposure part that is integrally formed with the insertion part and protrudes to the one axial side, and the exposure part may be configured to be exposed to an outside of the slide groove through the opening when the fixing block is assembled in the slide groove.

The fixing block may have a T-shaped cross-section in a plane that is perpendicular to the circumferential direction.

A plurality of fixing blocks may be provided, opposite circumferential ends of a portion of the slide groove defined by the block insertion groove may be opened, and the plurality of fixing blocks may be disposed in the slide groove along the circumferential direction.

According to another aspect of the present disclosure, a gas turbine comprises: a compressor configured to draw in and compress external air; a combustor configured to mix fuel with the external air compressed in the compressor and to combust a mixture of fuel and the compressed air; and a turbine which comprises a blade-disk assembly in which a blade and a disk are assembled and rotated by a combustion gas discharged from the combustor, wherein the blade-disk assembly comprises: the blade having a root part; the disk having a disk slot, into which the root part is inserted; and a fixing block inserted into a block assembly groove of the blade and a block insertion groove of the disk in a circumferential direction to retain an axial position of the blade with respect to the disk.

### BRIEF DESCRIPTION OF THE DRAWINGS

The above and other objects, features and advantages of the present disclosure will be more apparent from the following detailed description taken in conjunction with the accompanying drawings:
FIG. 1 is a cross-sectional view illustrating a schematic structure of a gas turbine, to which an embodiment of the present disclosure is applied;
FIG. 2 is an exploded perspective view illustrating an example of an assembly structure of a disk and a blade, to which an embodiment of the present disclosure is applied;
FIG. 3 is a perspective view illustrating a gas turbine according to an embodiment of the present disclosure, and is an enlarged perspective view illustrating an assembled portion of a disk, a blade, and a fixing block;
FIG. 4 is a perspective view illustrating a fixing block according to an embodiment of the present disclosure;
FIG. 5 is a top view illustrating a disk according to an embodiment of the present disclosure, when viewed from a top;
FIG. 6 is a side view illustrating a disk according to an embodiment of the present disclosure, when viewed from a side;
FIG. 7 is a perspective view illustrating a disk according to an embodiment of the present disclosure;
FIG. 8 is a bottom view illustrating a blade according to an embodiment of the present disclosure, when viewed from a bottom;
FIG. 9 is a side view illustrating a blade according to an embodiment of the present disclosure, when viewed from a side;
FIG. 10 is a perspective view illustrating a blade according to an embodiment of the present disclosure;
FIG. 11A is a perspective view illustrating a state, in which a fixing block is inserted axially into a disk according to an embodiment of the present disclosure;
FIG. 11B is a perspective view illustrating a state, in which a fixing block is moved in a circumferential direction along a block insertion groove formed in a disk according to an embodiment of the present disclosure;
FIG. 11C is a perspective view illustrating a process of assembling a blade in a disk according to an embodiment of the present disclosure;
FIG. 11D is a perspective view illustrating a process of inserting a fixing block into a block insertion groove and a block assembly groove according to an embodiment of the present disclosure; and
FIG. 12 is a view illustrating a partially enlarged view of a gas turbine according to an embodiment of the present disclosure, and is a view illustrating a state, in which fixing blocks are consecutively assembled in a circumferential direction.

### DETAILED DESCRIPTION

Hereinafter, an embodiment of the present disclosure will be described in detail with reference to the accompanying drawings.

First of all, embodiments described below are suitable for understanding technical characteristics of a gas turbine according to an embodiment of the present disclosure. However, the present disclosure is applied only to embodiments described below, or technical features of the present disclosure are not limited by the described embodiments. Various modified implementations are possible within the technical scope of the present disclosure.

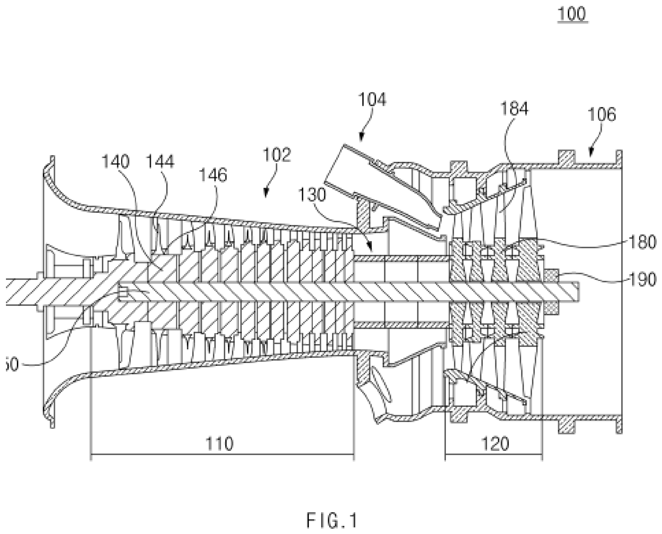

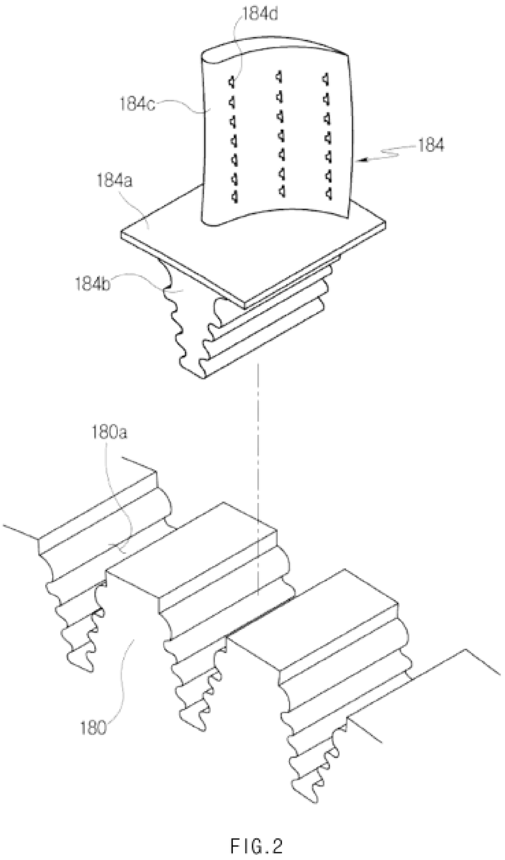

FIG. 1 is a cross-sectional view illustrating a schematic structure of a gas turbine, to which an embodiment of the present disclosure is applied, and FIG. 2 is an exploded perspective view illustrating an example of an assembly structure of a disk and a blade, to which an embodiment of the present disclosure is applied.

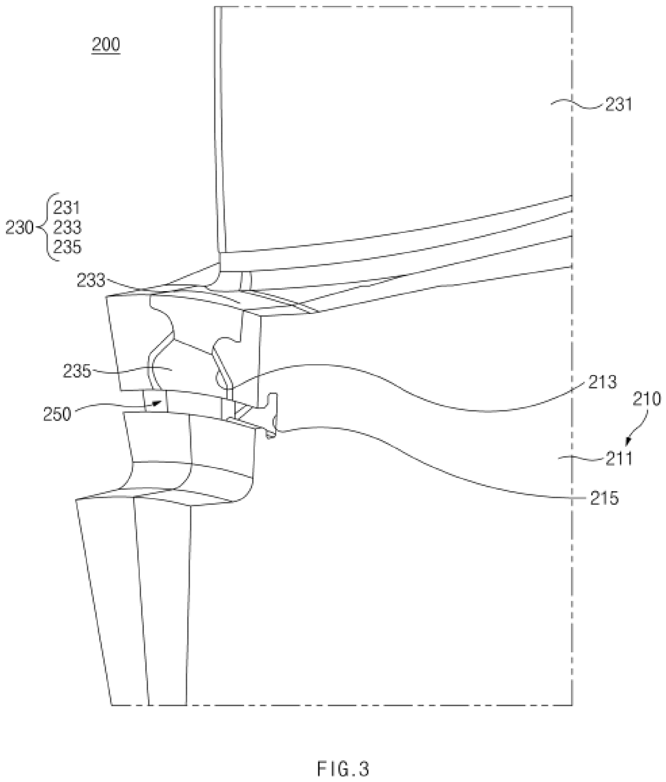

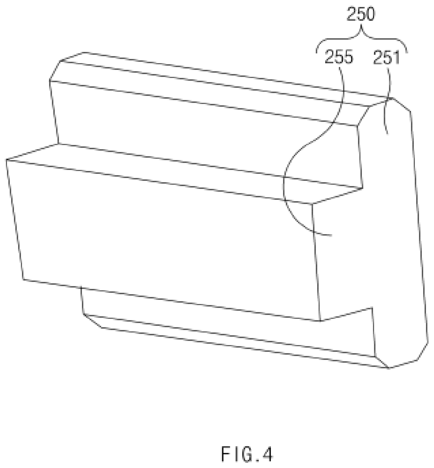

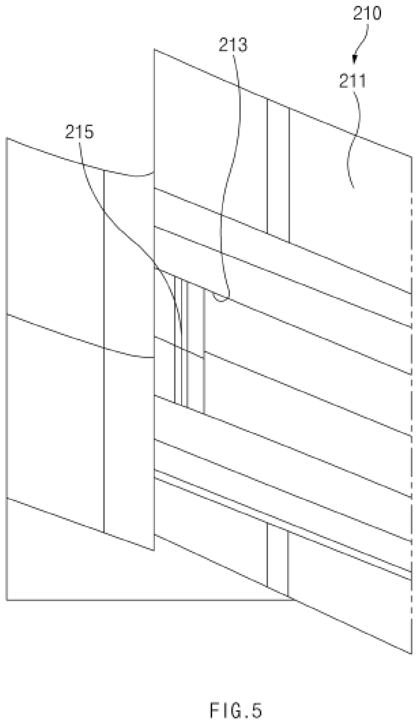

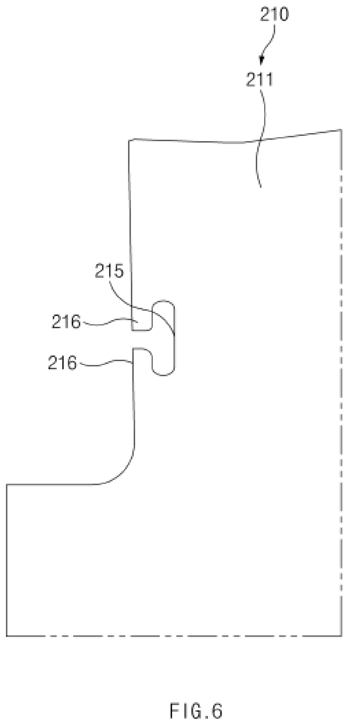

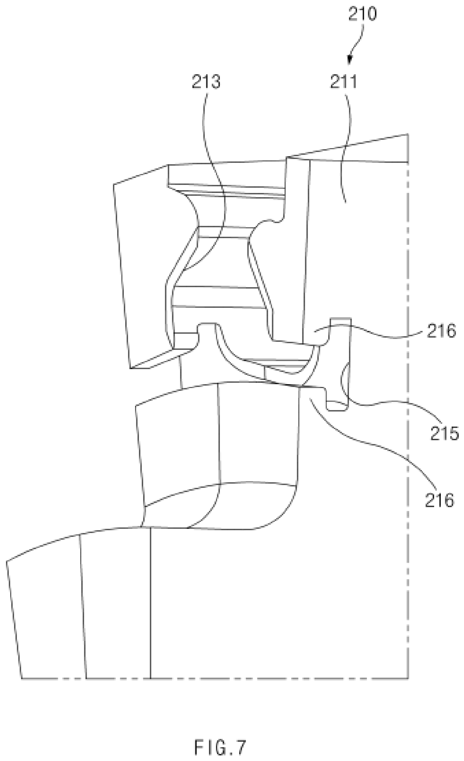

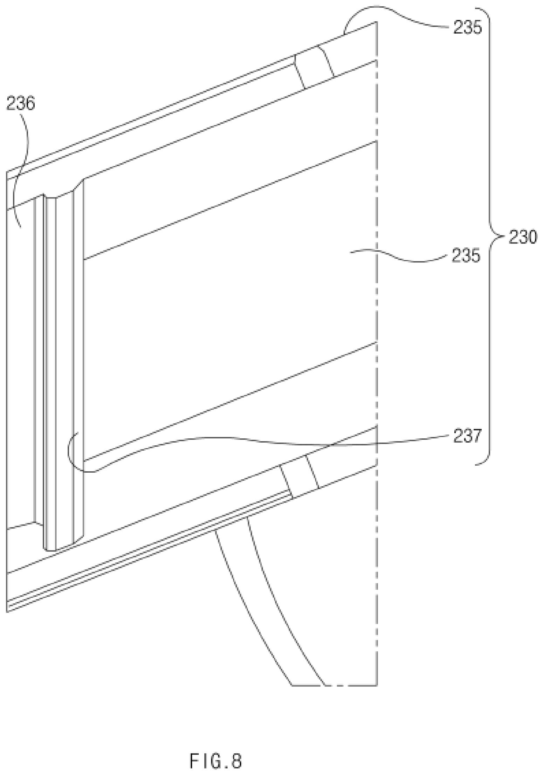

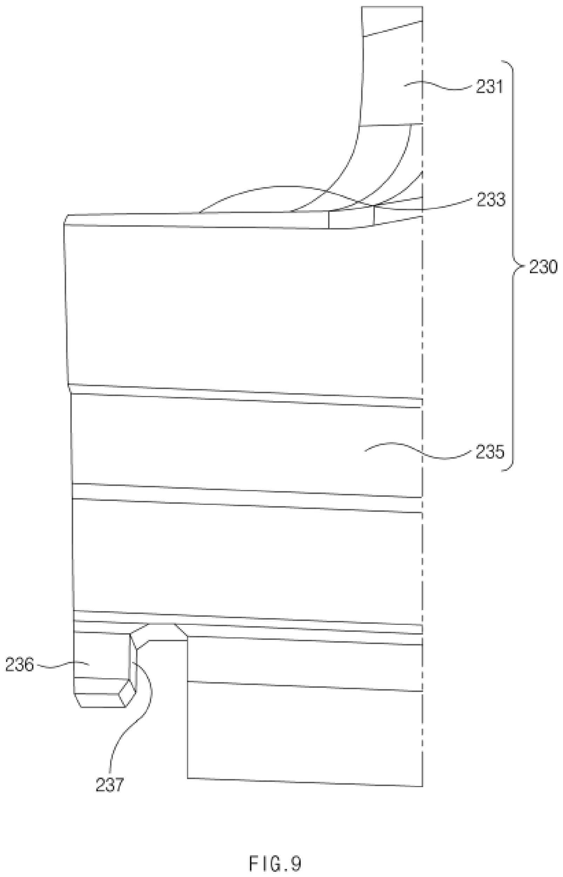

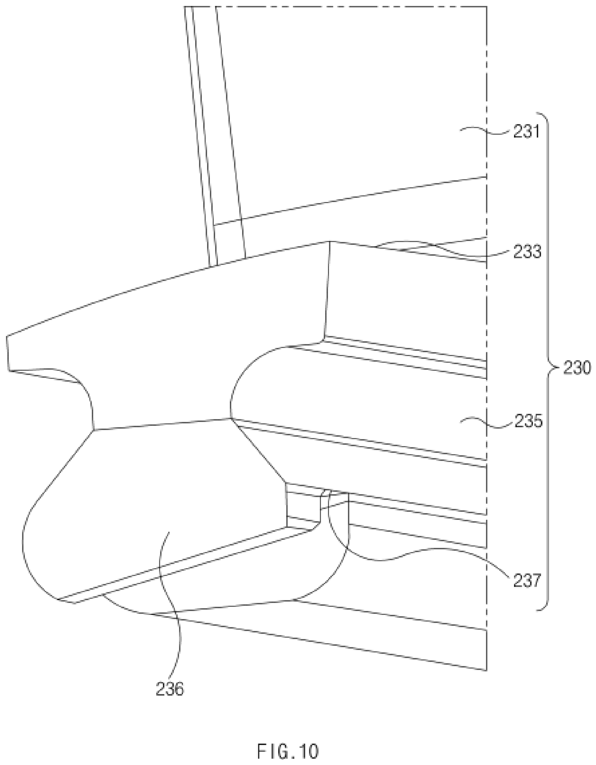

FIG. 3 is a perspective view illustrating a part of a gas turbine according to an embodiment of the present disclosure, and is an enlarged perspective view illustrating an assembled portion of a disk, a blade, and a fixing block, FIG. 4 is a perspective view illustrating a fixing block according to an embodiment of the present disclosure, FIG. 5 is a top view illustrating a disk according to an embodiment of the present disclosure, when viewed from a top, FIG. 6 is a side view illustrating a disk according to an embodiment of the present disclosure, when viewed from a side, and FIG. 7 is a perspective view illustrating a disk according to an embodiment of the present disclosure. FIG. 8 is a bottom view illustrating a blade according to an embodiment of the present disclosure, when viewed from a bottom, FIG. 9 is a side view illustrating a blade according to an embodiment of the present disclosure, when viewed from a side, and FIG. 10 is a perspective view illustrating a blade according to an embodiment of the present disclosure.

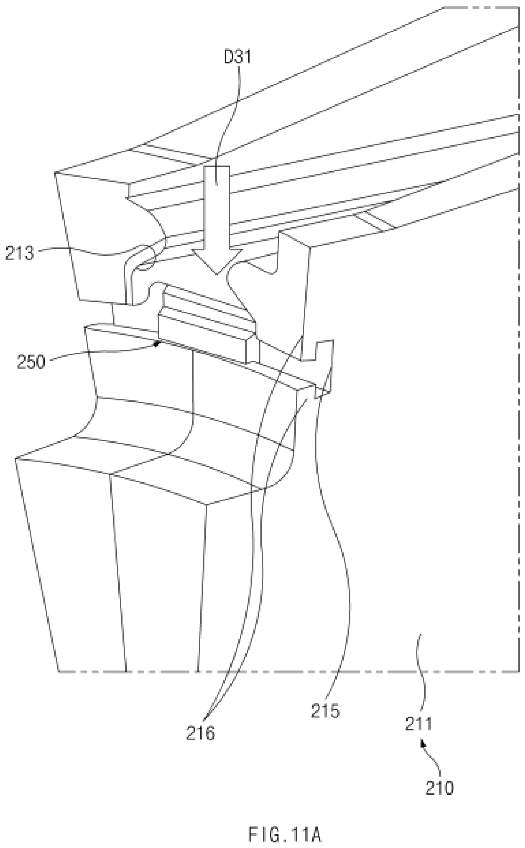

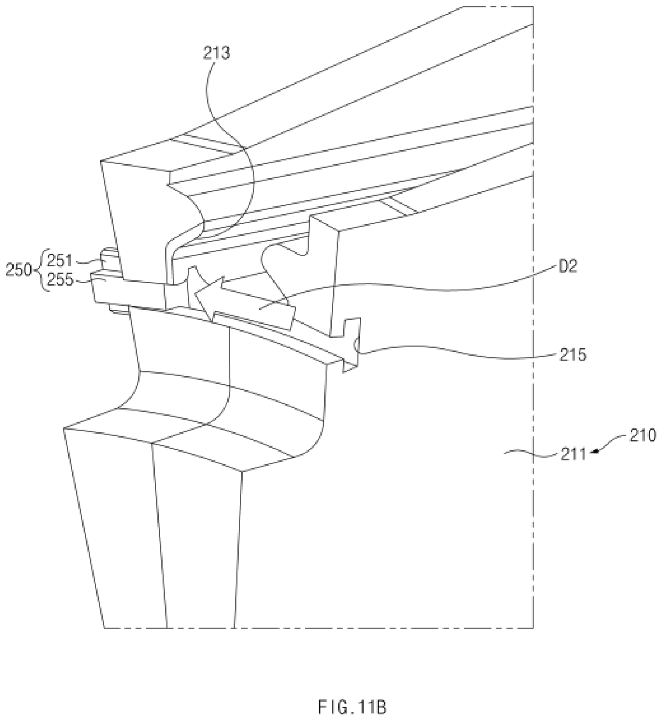

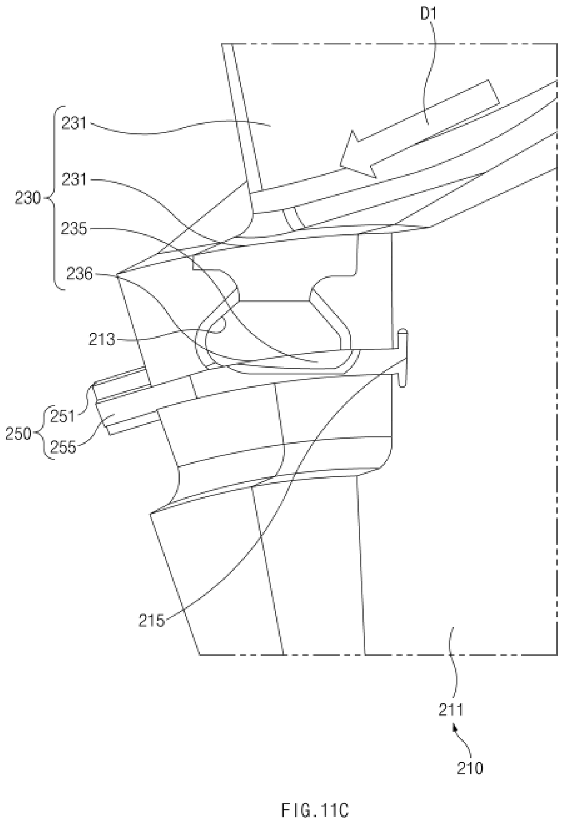

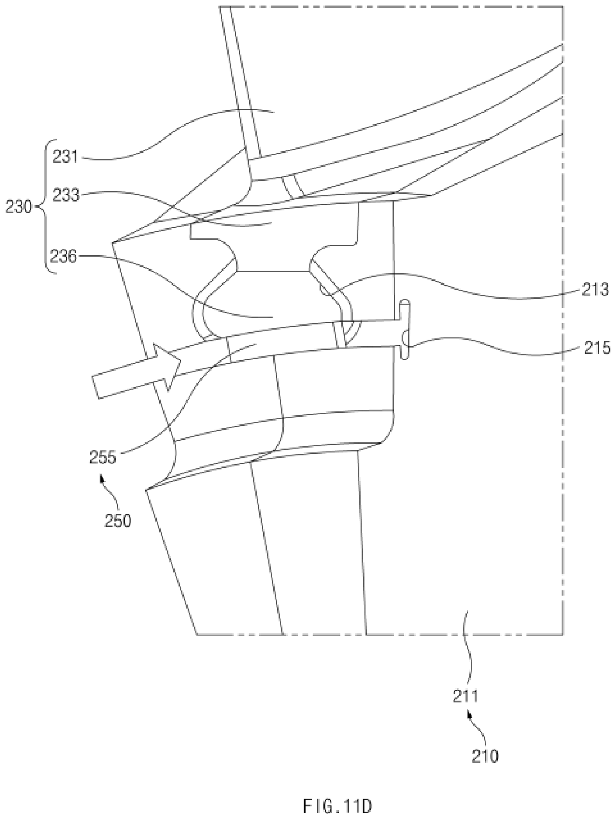

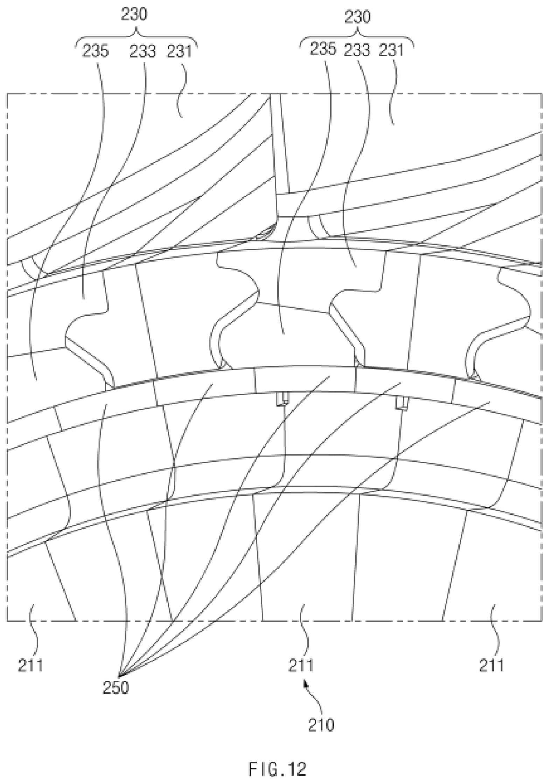

FIG. 11A is a perspective view illustrating a state, in which a fixing block is inserted into a disk according to an embodiment of the present disclosure, FIG. 11B is a perspective view illustrating a state, in which a fixing block is moved in a circumferential direction along a block insertion groove formed in a disk according to an embodiment of the present disclosure, FIG. 11C is a perspective view illustrating a process of assembling a blade in a disk according to an embodiment of the present disclosure, FIG. 11D is a perspective view illustrating a process of inserting a fixing block into a block insertion groove and a block assembly groove according to an embodiment of the present disclosure, and FIG. 12 is a view illustrating a partially enlarged view of a gas turbine according to an embodiment of the present disclosure, and is a view illustrating a state, in which fixing blocks are consecutively assembled in a circumferential direction.

Hereinafter, an embodiment of a turbine blade including a dovetail according to the present disclosure will be described in detail with reference to FIGS. 1 and 2.

Referring to FIG. 1, an example of a gas turbine 100, on which an embodiment of a turbine blade according to the present disclosure, is mounted is illustrated. The gas turbine includes a housing 102, and a diffuser 106, through which combustion gas of the turbine is discharged, is provided on a rear side of the housing 102. Furthermore, a combustor 104 that receives and burns compressed air is disposed on a front side of the diffuser 106.

When described with respect to a flow direction of air, a compressor section 110 is located on an upstream side of the housing 102, and a turbine section 120 is disposed on a downstream side thereof. Furthermore, a torque tube 130 that serves as a torque transmission member that transmits rotational torque generated in the turbine section 120 to the compressor section 110 is disposed between the compressor section 110 and the turbine section 120.

The compressor section 110 includes a plurality of compressor rotor disks 140 (for example, fourteen disks), and the respective compressor rotor disks 140 are fastened by tie bolts 150 not to be spaced apart from each other axially.

Specifically, the respective compressor rotor disks 140 are aligned with each other axially, with the tie bolt 150 passing through a substantial center thereof. Here, facing surfaces of adjacent respective compressor rotor disks 140 are pressed by the tie bolt 150, so that relative rotation thereof is not allowed.

A plurality of blades 144 are radially coupled to an outer peripheral surface of the compressor rotor disk 140. Each of the blades 144 includes a dovetail part 146 and is fastened to the compressor rotor disk 140.

A vane (not illustrated) that is disposed to be fixed to the housing is located between the respective rotor disks 140. The vane is fixed not to be rotated, unlike the rotor disks, and serves to align a flow of compressed air that has passed through the blades of the compressor rotor disk and guide the air to the blades of a rotor disk located on a downstream side.

Fastening types of the dovetail part 146 include a tangential type and an axial type. They may be selected depending on a required structure of a commercial gas turbine, and may have a generally known dovetail or fir-tree shape. In some cases, the blades may be fastened to the rotor disk by using other fastening devices, than the shapes described above, for example, fixtures, such as a key or a bolt.

The tie bolt 150 is disposed to pass through centers of the plurality of compressor rotor disks 140 and turbine rotor disks 180, with one end fastened in the compressor rotor disk located on a most upstream side, and an opposite end fastened by a fixing nut 190.

A shape of the tie bolt 150 may have various structures depending on the gas turbine, and is not necessarily limited to the shape illustrated in FIG. 1. That is, as illustrated, a single tie bolt may have a form, in which it passes through a central portion of the rotor disk, a plurality of tie bolts may have a form, in which they are disposed circumferentially, and a combination thereof is also possible.

Although not illustrated, a vane that serves as a guide blade may be installed at a next position of a diffuser to adjust a flow angle of fluid that enters an inlet of a combustor after increasing a pressure of the fluid to a design flow angle, in the compressor of the gas turbine, and this is referred to as a deswirler.

In the combustor 104, the introduced compressed air is mixed with fuel and burned to generate high-energy, high-temperature, and high-pressure combustion gas, and in an isobaric combustion process, a combustion gas temperature is increased up to a heat resistance limit that the combustor and turbine components may withstand.

A plurality of combustors that constitute a combustion system of a gas turbine may be arranged in a casing formed in a cell form, and each of them includes a burner including a fuel ejection nozzle and the like, a combustor liner that forms a combustion chamber, and a transition piece that is a connection part of the combustor and the turbine.

Specifically, the liner provides a combustion space, in which the fuel ejected by the fuel nozzle is mixed with the compressed air of a compressor and is burned. Such a liner may include a flame tube that provides a combustion space, in which the fuel mixed with air is burned, and a flow sleeve that forms an annular space while surrounding the flame tube. Furthermore, a fuel nozzle is coupled to a front end of the liner, and an ignition plug is coupled to a side wall thereof.

Meanwhile, a transition piece is connected to a rear end of the liner so that the combustion gas burned by the ignition plug may be sent toward a turbine. An outer wall of the transition piece is cooled by the compressed air supplied from the compressor so that damage due to a high temperature of combustion gas may be prevented.

For this purpose, the transition piece is provided with cooling holes for injecting air into an interior, and the compressed air cools a body in the interior through the holes and then flows toward the liner.

The cooling air that has cooled the above-described transition piece flows through an annular space of the liner, and compressed air may be supplied as cooling air to an outer wall of the liner from the outside of a flow sleeve through the cooling holes provided in the flow sleeve and may collide.

Meanwhile, the high-temperature and high-pressure combustion gas discharged from the combustor is supplied to the above-described turbine section 120. A rotational torque is caused by providing an impact and a repulsive force to the rotary blades of the turbine while the supplied high-temperature and high-pressure combustion gas is expanded, the obtained rotational torque is transmitted to the compressor section via the above-described torque tube, and power that exceeds the power required for driving the compressor is used to drive a generator and the like.

The turbine section is basically similar in structure to the compressor section. That is, the turbine section 120 is also provided with a plurality of turbine rotor disks 180 that are similar to the compressor rotor disks of the compressor section. Accordingly, the turbine rotor disks 180 also include a plurality of turbine blades 184 that are disposed radially. The turbine blades 184 may also be coupled to the turbine rotor disks 180 in a dovetail manner or the like. In addition, vanes (not illustrated) that are fixed to the housing are also provided between the blades 184 of the turbine rotor disks 180 to guide a flow direction of the combustion gas that has passed through the blades.

Referring to FIG. 2, the turbine rotor disk 180 has a substantially disk shape, and a plurality of coupling slots 180a are formed at an outer periphery thereof. The coupling slot 180a is formed to have a curved surface in a fir-tree shape.

The turbine blade 184 is fastened to the coupling slot 180a. In FIG. 2, the turbine blade 184 has a platform part 184a in a substantially plate shape at a central portion thereof. A side surface of the platform part 184a contacts the platform part 184a of an adjacent turbine blade to maintain a spacing between the blades in the circumferential direction.

Throughout the specification, the direction from the radial center of the turbine rotor disk 180 toward its outer periphery may be referred to as a radial direction. The radial direction is the same direction from the platform part 184a toward a tip of the turbine blade 184 when the turbine blade is 184 is assembled with the turbine rotor disk 180. The radially upward direction may be referred to as a upper side and the radially inward direction may be referred to as a lower side. Also, the direction along the periphery of the turbine rotor disk 180 having the radial center at its center may be referred to as a circumferential direction. Furthermore, a direction along a rotor on which rotor disks are mounted and assembled (i.e., the direction from one rotor disk toward an adjacent rotor disk) may be referred to as an axial direction. The combustion gas flows generally along the axial direction in the turbine section. The radial direction, the circumferential direction, and the axial direction are perpendicular to one another.

A blade portion 184c is formed on an upper surface of the platform part 184a. The blade portion 184c is formed to have a blade shape that is optimized according to specifications of the gas turbine, and has a leading edge that is disposed on an upstream side and a trailing edge that is disposed on a downstream side with respect to a flow direction of the combustion gas.

Here, unlike the blades of the compressor section, the blades of the turbine section are directly exposed to the high-temperature and high-pressure combustion gas. Since the temperature of the combustion gas may reach as high as 1700°C, a cooling means is required. To this end, a cooling passage is provided that extracts compressed air from selected portions of the compressor section and supplies the compressed air to the blades of the turbine section.

The cooling passage may be configured to extend from an outside of the housing as an exterior passage, to extend through an interior of the rotor disk as an interior passage, or to include both the exterior and the interior passages. As shown in FIG. 2, a plurality of film cooling holes 184d may be formed on a surface of the blade portion. The film cooling holes 184d communicate with a cooling passage (not illustrated) formed in an interior of the blade portion 184c to supply cooling air to the surface of the blade portion 184c.

A root part, that is, a dovetail part 184b, is formed on a bottom surface of the platform part 184a. The dovetail part 184b has a so-called axial-type form, in which it is inserted into the coupling slot 180a of the above-described rotor disk 180 along the axial direction of the rotor disk 180.

The dovetail part 184b has a substantially fir-tree-shaped curved portion, which is formed to correspond to a shape of the curved portion formed in the coupling slot. Here, a coupling structure of the dovetail part is not necessarily required to have a fir-tree shape, and may be formed to have a dovetail shape.

Here, a plurality of coupling slots 180a are radially disposed along an outer peripheral surface of the rotor disk. Furthermore, an interior shape of the coupling slot 180a corresponds to the shape of the dovetail part 184b. In general, the coupling slot 180a is formed slightly larger than the dovetail part 184b, so that a gap is formed between a surface of the dovetail part and a surface of the coupling slot in a coupled state. This gap allows the dovetail part to be inserted and fastened to the coupling slot more easily. By coupling the dovetail part 184b to the coupling slot 180a, the blades is fixed not to be moved in the radial direction of the rotor disk.

Furthermore, although not illustrated, a coupling pin for fixing an axial movement of the dovetail part is fastened between the dovetail part and the coupling slot.

Referring to FIGS. 1 to 12, a gas turbine 200 according to an embodiment of the present disclosure includes a blade 230, a disk 210, and a fixing block 250.

It relates to an assembly structure of the disk 210 and the blade 230 described in FIGS. 2 to 11D. Here, the disk 210 may be the compressor rotor disk 140 illustrated in FIG. 1, or may be the turbine rotor disk 180 illustrated in FIGS. 1 and 2. Furthermore, the blade 230 may be the compressor blade 144 illustrated in FIG. 1, or may be the turbine blade 184 illustrated in FIGS. 1 and 2. All of them have a common aspect that a rotating blade is fixed to the disk under a centrifugal force by fitting and coupling concave and convex portions of a dovetail or fir-tree shape.

Hereinafter, the compressor rotor disk 140 and the turbine rotor disk 180 will be collectively referred to as the disk 210. Furthermore, the compressor blade 144 and the turbine blade 184 will also be collectively referred to as the blade 230.

A root part 235 is formed in the blade 230. Furthermore, a disk slot 213, into which the root part 235 is inserted, is formed in the disk 210.

Specifically, the disk 210 is formed substantially in a disk shape, and a plurality of disk slots 213 may be formed along the circumferential direction at the outer periphery thereof. A curved surface may be formed in the disk slot 213. Here, the disk slot 213 may be in a similar shape to the coupling slot 180a (see FIG. 2) but may have a different shape performing the same function (i.e., receiving the root part of a blade and fixing the root part not to be moved in the radial direction from the disk). A groove that extends along the circumferential direction may be formed in the disk slot 213 of the disk 210.

The blade 230 may be radially disposed at a periphery of the disk 210, and may be coupled with the disk 210 in a dovetail shape. Specifically, the root part 235 of the blade 230 may be inserted into the disk slot 213 of the disk 210. The root part 235 may have a curved surface that is engaged with a curved surface of the disk slot 213. The root part 235 may have an axial type shape that is inserted into the disk slot 213 along the axial direction. Here, the root part 235 may be in a similar shape to the above-described dovetail part 180b (see FIG. 2) but may have a different shape performing the same function.

A groove that extends along the circumferential direction may be formed in the blade 230. This groove will be described more in detail below with reference to the block assembly groove 237 in FIGS. 8, 9 and 10.

The fixing block 250 is configured to be inserted in a circumferential direction into a groove that is formed in the blade 230 and a groove that is formed in the disk 210 to fix an axial position and a radial position of the blade 230 with respect to the disk 210.

Specifically, the fixing block 250 secures the axial position of the blade 230 relative to the disk 210, prevents separation of the blade 230 from the disk 210 during an operation of the gas turbine 200, and thereby serves to fix the blade 230 to the disk 210.

The fixing block 250 may be formed as a single component, and thus, a fixing structure may be simplified, and assembling and disassembling performance may be improved. Furthermore, the fixing block 250 may be assembled with the blade 230 and the disk 210 simultaneously by being inserted in the circumferential direction, thereby preventing the blade 230 from being axially separated from the disk 210.

The disk 210 may include a disk body 211 and a block insertion groove 215.

A disk slot 213 may be formed in the disk body 211. The disk body 211 may be understood as a portion of the disk 210 that includes a pair of structures defining the disk slot 213 therebetween. The portion forming such pair of structures may be referred to as a slot-side disk body portion, while a portion of the disk body 211 located below the pair of structures and connecting them may be referred to as a connecting-side disk body portion. The slot-side disk body portions are repeatedly arranged in the circumferential direction with the disk slot 213 positioned between two adjacent slot-side disk body portions, whereas the connecting-side disk body portion is continuously connected in the circumferential direction.

Furthermore, the block insertion groove 215 may be configured to receive the fixing block 250, and may extend in a circumferential direction.

Specifically, the disk body 211 is a body that constitutes the disk 210. Two adjacent portions of the disk body 211 forms a disk slot 213 therebetween. The block insertion groove 215 may be concavely formed in the disk body 211. The block insertion groove 215 may be formed to correspond to a shape of the fixing block 250 so that at least a part of the fixing block 250 is inserted thereinto, and may extend in a circumferential direction.

The block insertion groove 215 may have a T-shaped cross-section. The cross-section of the block insertion groove 215 is defined in a virtual plane perpendicular to the circumferential direction.

Specifically, when viewed in a virtual plane perpendicular to the circumferential direction, the block insertion groove 215 is recessed from one axial-side surface of the disk body 211. The recessed end extends both radially outward and radially inward. As a result, the cross-sectional shape of the recess, defined in the virtual plane perpendicular to the circumferential direction, has a T-shape. The radially outward extension portion and the radially inward extension portion of the recess may be referred to as a block insertion groove upper portion and a block insertion groove lower portion, respectively.

According to an embodiment, the block insertion groove lower portion may be continuously formed and extended in the circumferential direction, as the block insertion groove lower portion is provided in the connecting-side disk body portion of the disk body 211. By contrast, the block insertion groove upper portion may be formed discretely in the circumferential direction, as the block insertion groove upper portion is provided in the slot-side disk body portion with a disk slot 213 positioned between two adjacent slot-side disk body portions.

Because the block insertion groove 215 extends along the circumferential direction, the plurality of fixing blocks 250 may be consecutively inserted. Furthermore, since the block insertion groove 215 has a T-shaped cross-sectional shape when viewed from a side (i.e., in the circumferential direction), the inserted fixing block 250 is prevented from being axially separated.

More specifically, the disk body 211 may further include a pair of separation preventing projections 216 that define the block insertion groove 215.

Furthermore, one of the pair of separation preventing projections 216 (i.e., the lower projection) extends in the radially outward direction and the other one of the pair of separation preventing projections 216 (i.e., the upper projection) extends in the radially inward direction. That is, the lower and the upper projections extend toward and face each other, thereby defining the block insertion groove 215 with a T-shaped cross-section when viewed from a side (i.e., viewed in the circumferential direction).

In other words, the pair of separation preventing projections 216 may be formed at an inlet of the block insertion groove 215 and may be spaced apart from each other such that they face each other in the radial direction. As a result, the block insertion groove 215 may have an opening that is narrower than other portions. Due to the shape of the separation preventing projection 216, a side surface shape or a side cross-sectional shape of the block insertion groove 215 may be formed in a T-shape.

The region, at which the pair of separation preventing projections 216 are spaced apart from each other, may serve as an opening of the block insertion groove 215. When the fixing block 250 is inserted into the block insertion groove 215, at least a portion of the fixing block 250 may be exposed to the outside through the opening of the block insertion groove 215. After the disk 210, the blade 230, and the fixing block 250 are fully assembled, an operator may confirm the assembly state of the fixing block 250 through the opening.

The blade 230 may further include a blade body 231, and a platform part 233 that is formed between the blade body 231 and the root part 235.

Specifically, the blade body 231 may be provided at a radially outer side of the platform part 233, and the root part 235 may be formed at a radially inner side of the platform part 233.

For example, the platform part 233 may be inserted into the disk 210, as illustrated in FIG. 3, or may be disposed outside the disk 210, as illustrated in FIG. 2, so that side surfaces of the platform parts 233 of adjacent blades 230 contact each other to maintain a gap between the blades 230.

The root part 235 may include a block assembly groove 237 that extends in the circumferential direction. The block assembly groove 237 is configured such that the fixing block 250 is inserted thereinto.

Specifically, the block assembly groove 237 may be concavely formed from a lower end surface of the root part 235. The block assembly groove 237 may extend in the circumferential direction, allowing the fixing block 250 to be inserted and slid therein in the circumferential direction.

Furthermore, it may be formed to be opened toward a central axis of the disk 210, and thus, the block assembly groove 237 may be opened toward the central axis of the disk 210 to communicate with the block insertion groove 215.

The block assembly groove 237 and the block insertion groove 215 may together define a slide groove, into which the fixing block 250 is inserted when the blade 230 and the disk 210 are coupled to each other.

Specifically, the slide groove is formed by the block assembly groove 237 and the block insertion groove 215 upon assembly of the disk 210 and the blade 230. A portion of the fixing block 250 may be inserted into the block assembly groove 237, while a remaining portion thereof may be inserted into the block insertion groove 215. In this case, the slide groove extends in the circumferential direction. As a result, when the fixing block 250 is inserted into the slide groove, the fixing block 250 prevents the blade 230 from being extracted in the axial direction of the disk 210.

The slide groove may be formed with a shape corresponding to that of the fixing block 250.

In other words, the slide groove may be divided into the block assembly groove 237 located at a central area and the block insertion grooves 215 located on opposite sides of the block assembly groove 237, in the circumferential direction, with an opening that is opened toward one axial side. The slide groove is a groove that is formed by the block insertion groove 215 and the block assembly groove 237 in a state, in which the blade 230 and the disk 210 are assembled.

Furthermore, a portion of the fixing block 250 may be inserted into the block assembly groove 237, and a remaining portion of the fixing block 250 may be configured to be inserted into the block insertion groove 215.

As a result, the fixing block 250 may be assembled in the disk 210 and the blade 230 at the same time. Accordingly, the fixing block 250 may prevent the blade 230 from being separated from the disk 210.

The root part 235 may further include an assembly rib 236. The assembly rib 236 may extend in the radially inward direction to form a block assembly groove 237. That is, the assembly rib 236 is a portion that protrudes from a lower end and one axial side end of the root part 235 to form the block assembly groove 237 together with a body portion of the root part 235.

Specifically, the assembly rib 236 may extend in the radially inward direction. With this shape, the block assembly groove 237 may be formed in a shape that is opened toward the central axis of the disk 210. An opened portion of the block assembly groove 237 may communicate with the block insertion groove 215 when assembled. Furthermore, a side surface shape or a side cross-sectional shape of the block assembly groove 237 may be formed in a U-shape, when the side cross-section is defined in a virtual plane perpendicular to the circumferential direction.

Furthermore, an radial inward end of the assembly rib 236 may be positioned farther from a central axis of the disk 210 than an radial inward end of the root part 235. That is, a distance from the platform part 233 to the radial inward end of the assembly rib 236 may be smaller than a distance from the platform part 233 to the radial inward end of the root part 235.

This configuration allows the fixing block 250 to be inserted into the block assembly groove 237 that is formed by the assembly rib 236. Based on the shape and the size of the assembly rib 236, a structure may be implemented in which a groove for assembling the fixing block 250 is formed while the root part 235 is stably engaged in the disk slot 213.

According to an embodiment, the U-shape of the block assembly groove 237 in the root part 235 of the blade 230 may correspond to the cross-sectional shape of the block insertion groove upper portion of the block insertion groove 215 in the disk body 211. Accordingly, when all the blade 230 are assembled with the disk 210, the block assembly grooves 237 in the blades 230 and the block insertion grooves 215 in the disk body 211 may together form annular ring as a whole, the cross-sectional shape of which, at any plane perpendicular to the circumferential direction, has a T-shape.

Meanwhile, referring to FIG. 12, a plurality of fixing blocks 250 may be provided. Furthermore, opposite circumferential ends of the slide groove may be opened. Furthermore, a plurality of fixing blocks 250 may be disposed along a circumferential direction in the slide groove.

Specifically, opposite circumferential ends of the slide groove are opened, and the fixing block 250 may be inserted into the slide groove along a circumferential direction by sliding movement. With this structure, when a circumferential length of the fixing block 250 is smaller than a circumferential length of the slide groove, a plurality of fixing blocks 250 may be repeatedly disposed along the circumferential direction in a single slide groove. For example, as in the illustrated embodiment, the plurality of fixing blocks 250 may be continuously disposed.

Furthermore, an assembly, in which the disk 210 and the blade 230 are assembled, may be continuously assembled in a circumferential direction, and in this case, the slide groove provided in each assembly may be continuous. Furthermore, as illustrated, the fixing block 250 may be continuously assembled. In this case, because the fixing block 250 is a single part and is not a part formed by a separate assembly, it may be easy to be continuously assembled in a simple process.

In this way, because the plurality of fixing blocks 250 are continuously assembled, a fixing force between the disk 210 and the blade 230 may be further improved. Accordingly, it is possible to more effectively prevent the blade 230 from being separated from the disk 210 during an operation of the gas turbine 200.

Meanwhile, referring to FIG. 4, the fixing block 250 may include an insertion part 251 and an exposure part 255.

The insertion part 251 may be inserted into the block assembly groove 237 and the block insertion groove 215.

The exposure part 255 may be integrally formed with the insertion part 251, and may protrude to one axial side. Here, the exposure part 255 may be configured to be exposed to an outside of the slide groove through an opening when the fixing block 250 is assembled in the slide groove.

Accordingly, an operator may visually identify a state, in which the fixing block 250 is assembled with the blade 230 and the disk 210. Furthermore, even after all components of the gas turbine 200 are fully assembled, an assembly state of the fixing block 250 may be identified through a bore-scope inspection. Here, the bore-scope inspection refers to an inspection method in which an image is observed by inserting an optical device equipped with a light source and a lens into a specific part, such as an engine.

The fixing block 250 may have a T-shaped cross-sectional shape in a virtual plane that is perpendicular to the circumferential direction.

That is, the fixing block 250 and the slide groove may be formed in corresponding shapes. A side surface shape or a side cross-sectional shape of the fixing block 250 may be formed in a T-shape by a shape, in which the exposure part 255 protrudes from a central area of the insertion part 251. Furthermore, a side surface shape or a side cross-sectional shape of the slide groove may be formed in shapes corresponding thereto.

Hereinafter, a process of assembling the disk 210, the blade 230, and the fixing block 250 will be described with reference to FIGS. 11A to 11D.

First, referring to FIG. 11A, the fixing block 250 may be inserted into the block insertion groove 215 of the disk 210 in a direction D3 (i.e., in the radially inward direction). Here, the block insertion groove 215 may communicate with the block assembly groove 237 and may extend in a circumferential direction D2 (see FIG. 11B).

Furthermore, as in an example illustrated in FIG. 11B, the fixing block 250 may be slid along the circumferential direction D2 of the block insertion groove 215. In this case, the fixing block 250 may be moved to an area that does not interfere with the disk slot 213, so that the root part 235 is easily inserted.

Referring to FIG. 11C, the root part 235 may be inserted into the disk slot 213 in a direction D1 (i.e., an axial direction). That is, after the fixing block 250 is first assembled in the disk 210, the blade 230 may be assembled in the disk 210.

Thereafter, as illustrated in an embodiment of FIG. 11D, the fixing block 250 may be slid in the circumferential direction D2. In this case, a portion of the fixing block 250 may be inserted into the block assembly groove 237, and a remaining portion thereof may be configured to be inserted into the block insertion groove 215.

Through this process, the fixing block 250 may be assembled to fix the blade 230 in the disk 210. However, a process of assembling the fixing block 250 is not limited to the embodiment illustrated in FIGS. 11A and 11B, and any other method may be applied as long as the fixing block 250 may be simultaneously inserted into the block assembly groove 237 and the block insertion groove 215.

According to an embodiment of the present disclosure, by the fixing block, the blade may be prevented from being axially separated from the disk under any operating condition of the gas turbine.

Furthermore, according to an embodiment of the present disclosure, because there is no bent portion in the fixed assembly component, it is easy to manage the component and the component may be reused.

Furthermore, according to an embodiment of the present disclosure, when the blade is replaced, only the fixed assembly that fixes the blade may be disassembled and reassembled, so that a blade replacement operation may be facilitated.

Furthermore, by using the fixed assembly according to an embodiment of the present disclosure, the blade and the disk may be manufactured and assembled with a simple structure, so that workability may be improved and costs may be reduced.

As described above, although specific embodiments of the present disclosure have been described above, the spirit and scope of the present disclosure is not limited to these specific examples. Various modifications and variations are possible within the scope that does not change the gist of the present disclosure described in claims by those skilled in the art to which the present disclosure belongs.

## Claims

1. A blade-disk assembly for a gas turbine comprising:
a blade having a root part;
a disk having a disk slot, into which the root part is inserted; and
a fixing block inserted into a block assembly groove of the blade and a block insertion groove of the disk in a circumferential direction to retain an axial position of the blade with respect to the disk.

2. The blade-disk assembly of claim 1, wherein the disk includes:
a disk body, in which the disk slot is formed; and
wherein the block insertion groove is formed in the disk body such that the fixing block is inserted thereinto, and the block insertion groove extends in the circumferential direction.

3. The blade-disk assembly of claim 2, wherein the block insertion groove has a T-shaped cross-section in a plane perpendicular to the circumferential direction.

4. The blade-disk assembly of claim 3, wherein the disk body further includes:
a pair of separation preventing projections forming the block insertion groove,
wherein a lower projection of the pair of separation preventing projections extends radially outward and an upper projection of the pair of separation prevention projections extends radially inward such that they face each other to form the T-shaped cross-section of the block insertion groove, and
wherein the block insertion groove is formed to be opened toward one axial side.

5. The blade-disk assembly of claim 2, wherein the blade further includes:
a blade body; and
a platform part formed between the blade body and the root part.

6. The blade-disk assembly of claim 5, wherein
the block assembly groove is formed in the root part and configured such that the fixing block is inserted thereinto, and the block assembly groove extends in the circumferential direction.

7. The blade-disk assembly of claim 6, wherein the block assembly groove together with the block insertion groove defines a slide groove when the blade and the disk are coupled to each other, into which the fixing block is inserted and in which the fixing block is configured to slide.

8. The blade-disk assembly of claim 7, wherein the slide groove is divided into the block assembly groove located in a central area in the circumferential direction and the block insertion groove located at opposite sides of the block assembly groove, and an opening opened toward one axial side is formed, and
wherein a portion of the fixing block is inserted into the block assembly groove, and a remaining portion of the fixing block is inserted into the block insertion groove.

9. The blade-disk assembly of claim 7, wherein the root part further includes:
an assembly rib extending radially inward to define the block assembly groove, and
wherein a position of a radially inward end of the assembly rib is located at a position more distant from a central axis of the disk than a position of a radially inward end of other portions of the root part.

10. The blade-disk assembly of claim 8, wherein the fixing block includes:
an insertion part inserted into the block assembly groove and the block insertion groove; and
an exposure part integrally formed with the insertion part and protruding to the one axial side, and
wherein the exposure part is configured to be exposed to an outside of the slide groove through the opening when the fixing block is assembled in the slide groove.

11. The blade-disk assembly of claim 8, wherein the fixing block has a T-shaped cross-section in a plane perpendicular to the circumferential direction.

12. The blade-disk assembly of claim 7, wherein a plurality of fixing blocks are provided,
wherein opposite circumferential ends of a portion of the slide groove defined by the block insertion groove are opened, and
wherein the plurality of fixing blocks are disposed in the slide groove along the circumferential direction.

13. A gas turbine comprising:
a compressor configured to draw in and compress external air;
a combustor configured to mix fuel with the external air compressed in the compressor and to combust a mixture of fuel and the compressed air; and
a turbine which comprises a blade-disk assembly in which a blade and a disk are assembled and rotated by a combustion gas discharged from the combustor,
wherein the blade-disk assembly comprises:
the blade having a root part;
the disk having a disk slot, into which the root part is inserted; and
a fixing block inserted into a block assembly groove of the blade and a block insertion groove of the disk in a circumferential direction to retain an axial position of the blade with respect to the disk.
